(19) Europäisches Patentamt / European Patent Office / Office européen des brevets

(11) **EP 2 249 235 A1**

(12) **EUROPEAN PATENT APPLICATION**
published in accordance with Art. 153(4) EPC

(43) Date of publication:
    **10.11.2010 Bulletin 2010/45**

(51) Int Cl.:
    ***G06F 3/046*** (2006.01)     ***G01S 5/02*** (2010.01)

(21) Application number: **09712670.0**

(22) Date of filing: **20.01.2009**

(86) International application number:
    **PCT/RU2009/000010**

(87) International publication number:
    **WO 2009/104985 (27.08.2009 Gazette 2009/35)**

(84) Designated Contracting States:
    **AT BE BG CH CY CZ DE DK EE ES FI FR GB GR
    HR HU IE IS IT LI LT LU LV MC MK MT NL NO PL
    PT RO SE SI SK TR**
    Designated Extension States:
    **AL BA RS**

(30) Priority: **22.02.2008 RU 2008106667**

(71) Applicant: **Joint Stock Company "Intellect
    Telecom"
    Moscow 109044 (RU)**

(72) Inventors:
    • **LAZAREV, Sergey Grigorievich
      Nizhegorodskaya obl. 607189 (RU)**
    • **KIBKALO, Alexey Alexeevich
      Nizhegorodskaya obl. 607189 (RU)**

(74) Representative: **Sloboshanin, Sergej et al
    V. Füner, Ebbinghaus, Finck, Hano
    Mariahilfplatz 3
    81541 München (DE)**

(54) **METHOD FOR DETERMINING THE COORDINATES OF A MOUSE- OR ELECTRONIC STYLUS PEN-TYPE MANIPULATOR AND A DEVICE FOR CARRYING OUT SAID METHOD**

(57)     The invention relates to radio engineering, in particular to methods and devices for loading information into computers or game consoles. The inventive method for extending functionalities and the scope of a mouse- or electronic stylus pen-type manipulator involves emitting electromagnetic wave radiation with the aid of a main transmitter antenna built into the manipulator, receiving said electromagnetic waves with the aid of at least three, one base and two working, spaced antennas of a receiver, when the manipulator is moved on a plain, measuring the phase difference of the signals for the different pairs of the receiver antennas (the base antenna and each of the working antennas) with the aid of at least four, one base and three working, spaced antennas of the receiver, when the manipulator is three-dimensionally moved, and calculating the manipulator plane or three-dimensional coordinates according to the phase differences, wherein the device for determining the coordinates of a mouse- or electronic stylus pen-type manipulator comprises a manipulator transmitter with a base antenna built into the manipulator and a receiving device which contains at least three, one base and two working, spaced antennas, when the manipulator is moved on a plane, and at least four, one base and three working, spaced antennas, when the manipulator is three-dimensionally moved.

Fig. 1

## Description

### Technology Area

The inventions pertain to radio engineering, in particular to the methods and devices for data input into computers and/or game consoles, and may be used in computer engineering and electronics.

### Technology State-of-the-Art

The problem in designing and implementation of virtual reality systems is the interaction of a human being with three-dimensional objects of the virtual world, i.e. the development of convenient and effective methods and devices for respective information input. Standard personal computer appliances, such as a mouse or key-board, are not intended for manipulations in the 3D space. Therefore, it is necessary to develop a method, which would serve as the basis for designing of the pointing device, which would be capable of performing complicated actions in the intuitively easy manner and with a high precision within the 3D space that is usual for a man.

Presently, there are many patents covering different pointing devices, which are intended for graphic data input into computers and cursor manipulation at the monitor. All the pointing devices can be subdivided into two major classes, i.e. the computer mice and electronic styli of graphic plotting boards (digitizers).

In the first case, the pointing device is moved in space by the palm, while the buttons, wheels, mini-joystick etc. located at the mouse are manipulated with the fingers. The electronic stylus is manipulated like a pen or pencil, i.e. with the palm fingers, that makes such device more suitable for writing and/or drawing, though the stylus can also have one or several control buttons. Nevertheless, regardless of such superficial difference, the principles for obtaining and transfer of data on changes in the pointing device space location might be quite similar.

The majority of the pointing devices work at a plane, i.e. in the space of two dimensions (the coordinates «X» and «Y»). Their main function is to set correspondence between the pointing device location and/or displacement at any working surface with the cursor location and/or displacement at a monitor screen. The operational principle of the most common electromagnetic plotting boards is based on the location fixation of the pointing device (a stylus or mouse) using the antenna in the form of a grate, which is built into the basis (e.g. plotting board) and comprised by mutually perpendicular wire or printed conductors with the typical distance of 3 - 6 mm between them. The pointing device's emitter radiates a signal, which is received by the conductors in the plotting board. The microprocessor, which is built into the latter, uses the amplitude of the signals coming from different conductors of the antenna grate, calculates the pointing device location, as well as reads out additional data (pressing of the buttons, pressing effort etc.). The resolution ability of a plotting board may reach 2540 dpi $и\ более$. The plotting board starts "to feel" the stylus at nearly 10 mm from its working surface.

Both the stylus and mouse provide absolute positioning, i.e. each point of the plotting board working surface corresponds unambiguously to only one position of the cursor in the monitor. The pointing device displacement and velocity vectors are calculated based on the coordinate sequential changes.

The displacement along the third coordinate («Z») is effectuated using a turning wheel. Besides, as necessary, special turning wheels provide the displacements by angular coordinates (turns). Obviously, in many cases it would be preferable to support the cursor displacement over the three coordinates by the pointing device displacement in 3D space, while the angular coordinate changes for the virtual objects could be supported by the pointing device turning.

A method is known used to define the coordinates of the electronic stylus pointing device that is based on embedding into the pointing device of an emitter with a single antenna generating electromagnetic field pulses, which are received by the receiver antenna incorporated into the plotting board, as well as a device for defining the coordinates of the electronic stylus pointing device that has the receiver antenna implemented as a rectangular grate of conductors, where the field generated by the pointing device antenna excites electric signals, while the emitter antenna coordinates are defined by the amplitude of the signals in the conductors and thus the pointing device coordinates relatively to the plotting board surface are defined as well (see the US Patent N⃞ 3598903 of 06.06.1968, «POSITION-IDENTIFYING DEVICE», the authors are: Johnson; Robert A. (Raleigh, NC), Steckenrider; Ray N. (Raleigh, NC), the applicant is the International Business Machines Corporation (Armonk, NY)).

The aforementioned method and device implemented in the electromagnetic plotting boards have limited functionality and application because of the following drawbacks:

1. Working surface area of the pointing device displacement is limited by the size of a plotting board;
2. It is impossible to define the space and angular coordinates of the pointing device in the 3D space.

Technically, the device, which is the most similar to the proposed one, is a pointer (pointing device) with 3D indication that is particular for the incorporation of the actuator, which starts the electric signal generator with the control button; and n receivers, which define the 3D coordinates of the actuator motion direction and velocity by the electric signal phase shifts, along with the respective method to identify the coordinates of the pointer with 3D indication that is based on inducing electromagnetic radiation by the emitter incorporated into the pointer antenna, generation of the identifying signals of the pressed buttons that are received by the receivers, and defining of the 3D coordinates of the actuator motion direction and velocity by the signal phase shifts (see Japan Patent Nᵘ 10-39998 of 13.02.1998).

The aforementioned device is able to transfer electric signal after pressing a button (or several buttons) and to receive electric signal by several receivers, and then to define the 3D coordinates of the actuator motion direction and velocity by the received signal phase shifts, while after that the motion data along with the information on the pressed button is transferred to the data processing unit.

The drawback of such device is the impossibility to track the pointer position in the continuous mode because permanently periodic pressing of the button is necessary, in order to generate the electric signals.

Besides, the principle of defining the 3D coordinates by the signal phase shifts that is implemented in the aforementioned device does not allow unambiguous defining of the coordinates. Therefore, in the known patent there are no formulas, which would enable the coordinate calculations, and there is no practical application of the said technical decision.

**Disclosure of Invention**

The main task of the invention is to widen the functionality and applications due to devising the method and device, which would be capable of defining the location of the mouse or electric stylus pointing device intended for data input into computers and/or game consoles without limiting the working surface area of the pointing device displacement at a plane with the plotting board size, and providing the capability of more accurate defining of the pointing device space and angular coordinates in the 3D space.

As regards the method for defining the coordinates of the mouse or electric stylus pointing devices suited to input data into computers or game consoles, the aforementioned task is fulfilled by the invention on account of inducing electromagnetic radiation with the help of the emitter's main antenna embedded into the pointing device; receipt of the electromagnetic waves with at least three spatially distributed receiver antennas, i.e. the basic and working ones in case of the pointing device displacement at a plane, and as a minimum four spatially distributed receiver antennas, i.e. the basic and working ones in case of the pointing device displacement in space; measuring signal phase differences for different pairs of the receiver antennas, i.e. the basic and working ones; and calculating the pointing device coordinates at a plane or in space by the phase difference ratios; and, besides, inducing additional electromagnetic radiation with one and more additional spatially distributed and embedded into the pointing device receiver antennas radiating at different times; using phase difference ratios for different basic and working antenna pairs to calculate the location of each pointing device antenna in space; and calculating the pointing device angular coordinates by locations of the antennas.

In order to resolve the formulated technical task, the device for defining coordinates of the mouse or electric stylus pointing device, according to the second invention, contains the pointing device emitter with the main antenna embedded into the pointing device and receiver comprising at least three spatially distributed antennas, i.e. one basic and working ones, in case of the pointing device displacement at a plane, and not less than four spatially distributed antennas, i.e. one basic and working ones, in case of the pointing device motion in space; while the basic antenna through the serially connected bandwidth filter and amplifier is connected to the amplitude detector input; and each working antenna of the receiver through the serially connected bandwidth filter and amplifier is connected to the first input of the respective phase detector; and the second input of each phase detector in connected to the input of the amplitude detector; in doing so, the amplitude and phase detector outputs are connected to the respective inputs of the analog-digital transducer, whose output is connected to the input of the microcontroller that provides the data input into a computer or game device; and the pointing device emitter can have at least one additional antenna built into it, while the main and additional emitter antenna(s) are spatially distributed.

The essence of the inventions lies in the fact that the fulfillment of the operations in the aforementioned manner and designing of the device with the said entirety of the features makes it possible to define the space and angular coordinates of the pointing device in 3D space, as well as exclude the dependence and limitations on the working surface area of the pointing device displacement.

The entirety of the technical features of the proposed device along with the essential features, which are absent in the other well-known device, in particular, basic and working antennas for measuring the phase difference between the pairs of the basic antenna and each working one, allows unambiguous defining of the 3D coordinates of the pointing devices (see claims 1 - 17 of the description of the invention).

Besides, the use of the additional antenna in the proposed device (see i.4) allows to increase the accuracy of defining the pointing device coordinates.

**Brief Description of Drawings**

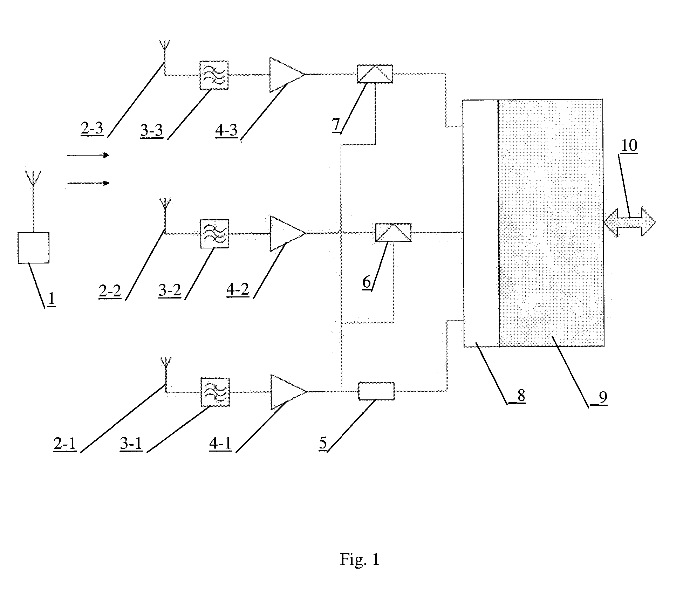

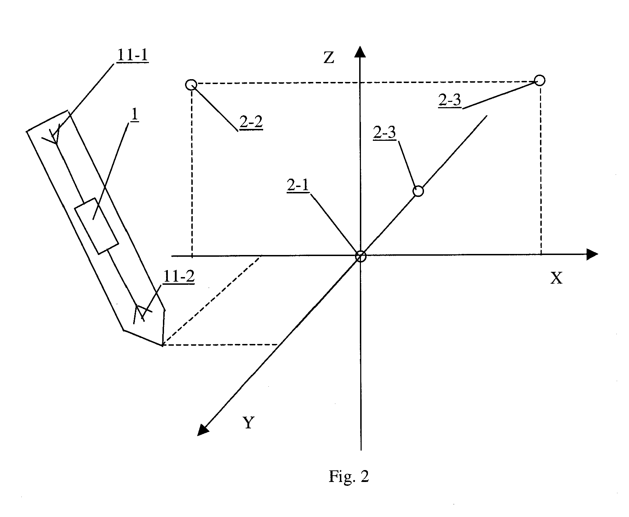

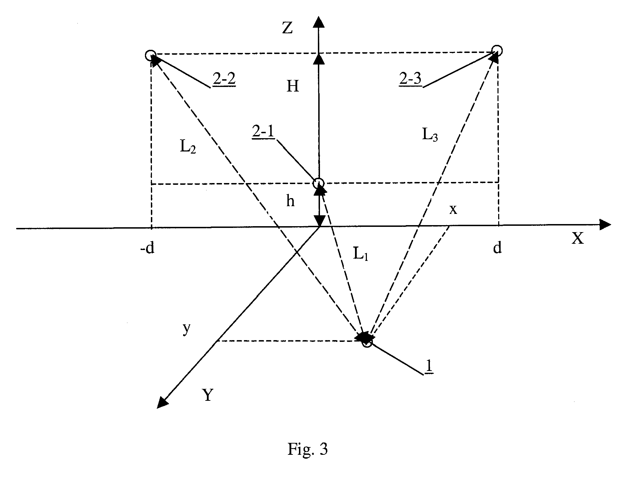

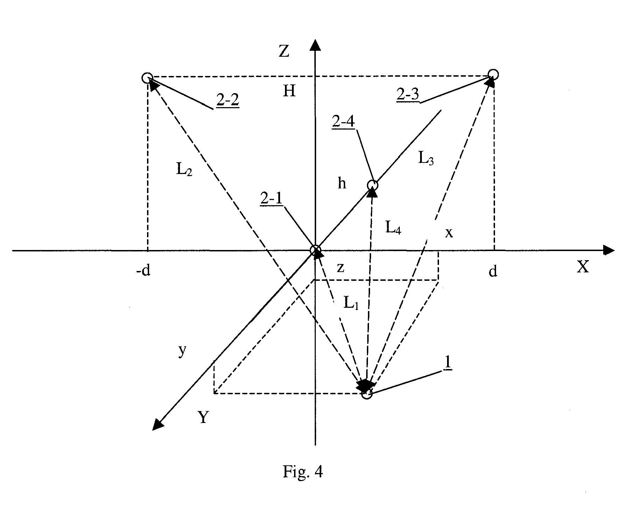

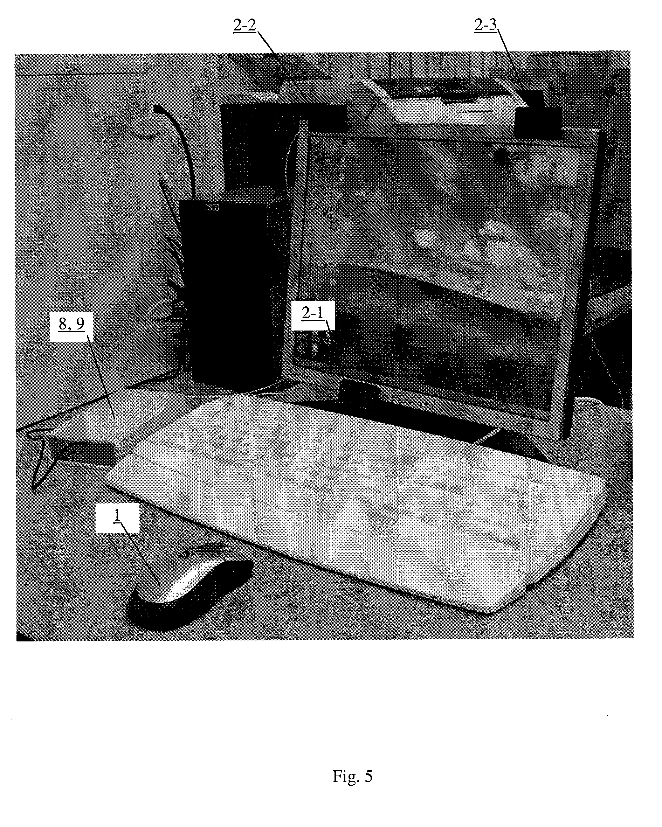

Fig. 1 shows the example of the implementation scheme for the claimed device when the pointing device works at a plane; fig. 2 shows the example of spatial distribution of the antennas of the receiver and electric stylus pointing device; fig. 3 shows the spatial distribution of the antennas of the receiver and pointing device, when working at a plane; fig. 4 shows the example of the spatial distribution of the antennas of the receiver and manipulator, when working in space; and fig. 5 shows the pilot device.

**Best Implementation of Invention**

In order to input data into computers and game devices, electromagnetic radiation is induced using the receiver's main antenna built into the pointing device. Then, the electromagnetic waves are received with the help of at least three spatially distributed antennas of the receiver, i.e. the basic one and working ones, in case of the pointing device displacement at a plane, and as a minimum four spatially distributed antennas of the receiver, i.e. the basic one and working ones, in case of the pointing device motion in space. After that the signal phase differences are measured for different antenna pairs of the receiver, i.e. the basic one and each working one; and by the phase difference ratios the pointing device coordinates are calculated either at a plane or in space.

Besides, in order to define the coordinates of the electric stylus pointing device, additional electromagnetic radiation is induced using one or more spatially distributed additional receiver's antennas incorporated into the pointing device, the radiation from the antennas is emitted at different times, and therefore by the phase difference ratios for different pairs comprised by the main antenna and working ones the location of each antenna in space is calculated and by their locations the pointing device angular coordinates are computed.

The device for defining the coordinates of the mouse and electric stylus pointing devices contains the emitter 1 of the pointing device with the main antenna incorporated into the pointing device and the receiver, which includes not less than three spatially distributed antennas, i.e. the basic one 2-1 and two working ones 2-2 and 2-3 in case of the pointing device displacement at a plane, and not less than four spatially distributed antennas 2-1, 2-2, 2-3 and 2-4, i.e. one basic antenna and working ones, in case of the pointing device motion in space.

The basic antenna 2-1 through the serially connected bandwidth filter 3-1 and amplifier 4-1 is connected to the input of the amplitude detector 5; while each receiver's working antenna 2-2 (2-3) through the serially connected bandwidth filter 3-2 (3-3) and amplifier 4-2 (4-3) is connected to the first input of the respective phase detector 6 (7); the second input of each phase detector 6 (7) is connected to the amplitude detector input 5, while the outputs of the amplitude and phase detectors 5 and 6 (7) are connected to the respective inputs of the analog-digital transducer 8, whose output is connected to the input of the microcontroller 9, which provides the data input into the computer or game device through the interface 10. Apart from the main antenna 11-1, the emitter 1 of the pointing device can be equipped with at least one additional antenna 11-2, while the main antenna and additional one (ones) 11-1 and 11-2 of the emitter are spatially distributed.

**Method and Device are Implemented as Follows**

Recording of the mouse signal by three and more antennas 2-1 - 2-3 followed by the signal analysis by the phase detectors 6, 7 (fig.1) allows to define the mouse coordinate at a plane or in space with a high accuracy. The phase methods can provide the relative measuring error of $\sim 10^{-8} - 10^{-6}$.

The mouse generator operates in the frequency band corresponding to that of the advanced wireless appliances. Using the frequency of several dozens Hz the pulse packages are generated to transfer first the information on the state of the buttons (similarly to existing mice) followed by a continuous signal with the duration of e.g. up to several dozens mcs, during which the phase detectors 6, 7 are operating. If necessary, in order to reduce the error in defining the pointing device coordinates relying on statistical methods, it is possible to increase the frequency of the pulse packages generation. The indications of the phase detectors 6, 7, using trigonometrical formulas at the microcontroller 9 of the base, are converted into the coordinate of the mouse pointing device and all this information (state of the buttons and coordinate changes) is transferred to the computer using the standard protocol.

Let us consider the phase ratios. For the sake of easiness, let us consider the case, when the pointing device (mouse) can move at a semi-plane (X - Y, Z = 0, Y > 0) (see fig. 3), where h is the height of the antenna 2-1 above the working plane; H is the height of the antennas 2-2 and 2-3 above the working plane; 2d is the width of the separation of the antennas 2-2 and 2-3; L1, L2, L3 is the distance from the emitter to respective antennas.

Then, the phases of the signals from the pointing device's emitter 1 operating at the wavelength $\lambda$ will be respectively equal to the following:

$$\varphi_1 = k \cdot L_1 = k \cdot \sqrt{x^2 + y^2 + h^2} \qquad (1)$$

$$\varphi_2 = k \cdot L_2 = k \cdot \sqrt{(x+d)^2 + y^2 + H^2} \qquad (2)$$

$$\varphi_3 = k \cdot L_3 = k \cdot \sqrt{(x-d)^2 + y^2 + H^2} \text{ , where} \qquad (3)$$

$$k = \frac{2\pi}{\lambda} \qquad (4)$$

The mere wave phase does not have any physical significance in this case, though it is meaningful and measurable the phase difference between the signals from e.g. the second and first antennas ($\varphi_{21}$) and third and first ones ($\varphi_{31}$):

$$\varphi_{21} = \varphi_2 - \varphi_1 = k \cdot \left[ \sqrt{(x+d)^2 + y^2 + H^2} - \sqrt{x^2 + y^2 + h^2} \right] \qquad (5)$$

$$\varphi_{31} = \varphi_3 - \varphi_1 = k \cdot \left[ \sqrt{(x-d)^2 + y^2 + H^2} - \sqrt{x^2 + y^2 + h^2} \right] \qquad (6)$$

In principle, measuring the difference of the phases $\varphi_{21}$ and $\varphi_{31}$ using the system of the equations (5, 6), it is possible to calculate to coordinates x, y, a, and, consequently, the location of the pointing device. To support normal operation of the pointing device, the changes in the emitter coordinates should be unambiguously connected with the changes in the phase differences. Let us write down the expression for the differentials $d\varphi_{21}$ and $d\varphi_{31}$ taken in the point x, y:

$$d\varphi_{21} = \frac{\partial \varphi_{21}}{\partial x} \cdot dx + \frac{\partial \varphi_{21}}{\partial y} \cdot dy \qquad (7)$$

$$d\varphi_{31} = \frac{\partial \varphi_{31}}{\partial x} \cdot dx + \frac{\partial \varphi_{31}}{\partial y} \cdot dy \qquad (8)$$

Let us find the determinant $\Delta$ of the system of the equations (7, 8).

$$\Delta = \begin{vmatrix} \dfrac{\partial \varphi_{21}}{\partial x} & \dfrac{\partial \varphi_{21}}{\partial y} \\[2ex] \dfrac{\partial \varphi_{31}}{\partial x} & \dfrac{\partial \varphi_{31}}{\partial y} \end{vmatrix} = \frac{\partial \varphi_{21}}{\partial x} \cdot \frac{\partial \varphi_{31}}{\partial y} - \frac{\partial \varphi_{21}}{\partial y} \cdot \frac{\partial \varphi_{31}}{\partial x} \qquad (9)$$

$$\frac{\partial \varphi_{21}}{\partial x} = k \cdot \left( \frac{x+d}{Q_1} - \frac{x}{Q} \right) \tag{10}$$

$$\frac{\partial \varphi_{21}}{\partial y} = k \cdot y \cdot \left( \frac{1}{Q_1} - \frac{1}{Q} \right) \tag{11}$$

$$\frac{\partial \varphi_{31}}{\partial x} = k \cdot \left( \frac{x-d}{Q_2} - \frac{x}{Q} \right) \tag{12}$$

$$\frac{\partial \varphi_{31}}{\partial y} = k \cdot y \cdot \left( \frac{1}{Q_2} - \frac{1}{Q} \right) \tag{13}$$

$$Q = \sqrt{x^2 + y^2 + h^2} \tag{14}$$

$$Q_1 = \sqrt{(x+d)^2 + y^2 + H^2} \tag{15}$$

$$Q_2 = \sqrt{(x-d)^2 + y^2 + H^2} \tag{16}$$

Upon the substitution, we will get the following:

$$\Delta = -\frac{k^2 \cdot y \cdot d}{Q \cdot Q_1 \cdot Q_2} \cdot (Q_1 + Q_2 - 2 \cdot Q) \tag{17}$$

As is obvious from fig. 3, for the chosen geometry of the location of the antennas the expression H > h is just, therefore, at least near to the axis «Y» (x → 0) and at y > 0, the determinant is the following $\Delta \neq 0$, and the connection of the pointing device coordinate changes with the phase differences is unambiguous.

Similar ratios can be obtained for the space pointing device as well, while the variant of the location of the pointing device's antennas is shown in fig. 4, where H is the height of the location of the antennas 2-2 and 2-3; 2d is the width of the separation of the antennas 2-2 and 2-3; h is the depth of spacing the antenna 2-1 behind the plane of the location of the antennas 2-2, 2-3, 2-4; $L_1$. $L_2$. $L_3$. $L_4$ are the distances from the pointing device to the antennas 2-1, 2-2, 2-3, 2-4.

When using the pointing device according to the claimed method as a computer mouse to work at a plane with the limited surface area, instead of the mode of the absolute correspondence of the cursor location at the monitor and the mouse coordinate, it may be required the mode of a relative displacement (dragging) of the cursor in case of the mouse displacement with disruption, which corresponds to the rupture of conventional pointing devices from the surface of the table or mouse pad. Therefore, it is necessary to equip the pointing device (mouse) with the surface touching sensor (e.g. a tensor resistive one) or special control button.

In some cases, in order to upgrade the accuracy of the device operation, it might be sensible to use more than three (3) antennas in the plane case and more than four (4) antennas in the space case. Then, more operations can be fulfilled and the result can be averaged. This is similar to the accuracy upgrade in the GPS devices in the vicinity of more satellites.

Incorporating into the pointing device two antennas with the serially started generators of the emitter, or with one generator switchable for two antennas, it is possible to define not only the spatial location of the pointing device but its orientation as well (see fig. 2). This might be essential both for graphic applications (defining of the stylus slope), and for working with space objects. In particular, designing of the claimed device in the variant of defining the spatial and angular coordinates can be significant for game applications.

The antennas and other elements of the receiver may be incorporated either into a specially designed structure, i.e. "the base" of the device, or into existing elements of the computer and game facilitating hardware, e.g. the monitor, key-board or system unit.

Upon the whole, the following variants of the claimed device can be implemented:

2D (defining coordinate at a plane),
2D/1S (defining coordinate and turning angle at a plane);
3D (defining coordinate in space);
3D/2S (defining coordinate and direction of the pointing device in space);
3D/3S (complete defining of spatial and angular coordinates of the pointing device).

Considering that "electromagnetic" (or "inductive") pointing devices capable of operating in 3D space rather than only at a plane have not been known before the claimed invention, the latter meets the criterion of novelty.

Considering that the use of phase-sensitive electronics is not obvious for designing computer pointing devices capable of operating in 3D volume, the claimed invention meets the criterion of inventive height.

The devices based on the claimed method can be applied in industry (CAD designing, 3D simulation), entertainment business (computer games, game consoles, playing machines) etc. The claimed invention is relatively easy in implementation. It was demonstrated by manufacturing of the pilot prototype of the device. The cost of the electronic components for the device implementation is relatively low and might be brought down even more, if to start up a serial production of special microchips, that would provide the competitive edge as opposed to other well-known products. Therefore, the claimed invention meets the criterion of industrial applicability.

**Information Confirming Implementability of Invention**

The pilot prototype of the device of the claimed invention is built (see fig. 5). The aforementioned pilot prototype demonstrated the implementability of the phase-sensitive pointing devices. The emitter is implemented as a circuit with the quarts frequency stabilization and amplitude/pulsed signal modulation.

The device transfers the coded signals of the identification and pressing of the buttons, as well as the signal of a certain duration for the phase measurements. All the signals are formed with the help of the microcontroller 9. In the beginning of the package the identification bytes are transferred, then there go the bytes carrying the information on the state of the buttons and start of the phase difference measurements. The continuous impulse, its duration sufficient to perform the phase measurements, ends the package.

The receiver is implemented a circuit with direct amplification with quarts filters at the input.

The device for processing of the phase signals converts the analog signal, which is proportional to the difference of the phases, into the digital format and calculates the current coordinates of the pointing device. It is implemented as the microcontroller with the embedded analog-digital transducer. The same microcontroller implements the system of commands and exchange protocol through the USB busbar.

This means that the control program of the receiver recognizes the emitter commands by way of analysing the signal, which is discriminated by the amplitude detector, and then calculates the current coordinates of the pointing device by the signals of the phase detectors, and sends the necessary signals to the computer using the system of commands employed for a standard mouse and the USB protocol. The control program for the microcontroller is developed using the pertinent software and loaded into the microcontroller using a standard programmer device.

In terms of design, the emitter is assembled in the case of a standard wireless optical mouse.

The receiver of the pilot prototype is implemented in a standard shielded case. The antennas, e.g. magnetic antennas, are connected to the receiver through the SMA connectors. The receiver can be powered through the USB busbar.

So, the proposed inventions provide the capability to define spatial and angular coordinates of the pointing device in 3D space and exclude any dependence and limitations on the working surface area of the pointing device displacement.

**Industrial Applicability**

The aforementioned advantages of the proposed method and device provide the opportunity for their wide application in radio engineering; computers and electronic engineering, in particular in the devices for data input into computers and game consoles.

**Claims**

1. Method for defining the coordinates of the pointing devices such as "mouse" or "electronic stylus" used to enter data into computers and/or game consoles that is **charact erized by** inducing electromagnetic radiation with the help of the main emitter's antenna incorporated into the pointing device; receipt of the said electromagnetic waves with the help of at least three spatially distributed antennas, i.e. the basic one and working ones, in case of the pointing device displacement at a plane; and with the help of at least four spatially distributed antennas, i.e. the basic one and working ones, in case of the pointing device displacement in space; measuring the signal phase differences for different pairs of the receiver antennas, i.e. the basic one and each working one; and calculation of the pointing device coordinates at a plane or in space by the phase difference ratios.

2. Method of Claim 1, which is **particular** for inducing additional electromagnetic radiation using one and more spatially separated and incorporated into the pointing device extra emitter antennas, whose radiation is emitted in different time intervals, while the location of each antenna of the pointing device in space is calculated by the ratios of the phase differences at different pairs of the basic and working antennas of the receiver, and the angular coordinates of the pointing device are calculated by their locations.

3. Device for defining the coordinates of the pointing devices like a "mouse" or "electronic stylus" used to enter data into computers and/or game consoles that is **charact erized** by containing the pointing device's emitter with the main antenna embedded into the pointing device and receiver, which includes not less than three spatially distributed antennas, i.e. the basic one and working ones, in case of the pointing device displacement at a plane, and at least four spatially distributed antennas, i.e. the basic one and working ones, in case of the pointing device displacement in space, while the basic antenna through the serially connected bandwidth filter and amplifier is connected to the input of the amplitude detector, and each working antenna of the receiver through the serially connected bandwidth filter and amplifier is connected to the first input of the respective phase detector, while the second input of each phase detector is connected to the input of the amplitude detector, and the outputs of the amplitude and phase detectors are connected to the respective inputs of the analog-digital transducer, whose output is connected to the input to the microcontroller, which provides the data input into a computer or game console.

4. Device of Claim 3, which is **particular** for the equipment of the pointing device emitter with at least one additional antenna incorporated into the pointing device, while the main and additional antenna(s) of the emitter are spatially separated.

2-3   3-3   4-3   7

2-2   3-2   4-2   6

1

2-1   3-1   4-1   5

10

8   9

Fig. 1

Fig. 2

Fig. 3

Fig. 4

Fig. 5

## INTERNATIONAL SEARCH REPORT

| | |
|---|---|
| | International application No. |
| | PCT/RU 2009/000010 |

| A. CLASSIFICATION OF SUBJECT MATTER | |
|---|---|
| | *G06F 3/046* (2006.01) |
| | *G01S 5/02* (2006.01) |

According to International Patent Classification (IPC) or to both national classification and IPC

| B. FIELDS SEARCHED |
|---|
| Minimum documentation searched (classification system followed by classification symbols) |
| G06F 3/03, 3/033, 3/041, 3/046, G01S 5/00, 5/02 |
| Documentation searched other than minimum documentation to the extent that such documents are included in the fields searched |
| |
| Electronic data base consulted during the international search (name of data base and, where practicable, search terms used) |
| Esp@cenet, USPTO, WIPO, PAJ, BD Rospatenta |

| C. DOCUMENTS CONSIDERED TO BE RELEVANT | | |
|---|---|---|
| Category* | Citation of document, with indication, where appropriate, of the relevant passages | Relevant to claim No. |
| A | JP 10039998 A (NIPPON ELECTRIC CO) 13.02.1998, the abstract cited in the description | 1-4 |
| A | US 5239139 A (MARC ZUTA) 24.08.1993, the abstract, column 1, line 37- column 2, line 19, column 2, line 55- column 6, line 2 | 1-4 |
| A | RU 2082995 C1 (AZIZOV OLEG ALI-ASKEROVICH et al.) 27.06.1997, page 5, right column, line 37-page 7, right column, line 60 | 1-4 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 May 2009 (21.05.2009) | 04 June 2009 (04.06.2009) |

| Name and mailing address of the ISA/ | Authorized officer |
|---|---|
| **RU** | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3598903 A

- JP 10039998 A